(19) Europäisches Patentamt
European Patent Office
Office européen des brevets

(11) **EP 1 784 006 A1**

(12) **EUROPEAN PATENT APPLICATION**
published in accordance with Art. 158(3) EPC

(43) Date of publication:
**09.05.2007 Bulletin 2007/19**

(51) Int Cl.:
*H04N 5/225* (2006.01)    *H04N 5/76* (2006.01)
*H04N 5/91* (2006.01)     *G06F 17/30* (2006.01)

(21) Application number: **05765650.6**

(22) Date of filing: **12.07.2005**

(86) International application number:
**PCT/JP2005/012801**

(87) International publication number:
**WO 2006/016461 (16.02.2006 Gazette 2006/07)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **09.08.2004 JP 2004232761**

(71) Applicant: **NIKON CORPORATION**
**Tokyo 100-8331 (JP)**

(72) Inventors:
• **YORITA, Naoaki,**
  **C/O NIKON CORPORATION**
  **Tokyo 100-8331 (JP)**
• **IN, Tetsuo,**
  **C/O NIKON CORPORATION**
  **Tokyo 100-8331 (JP)**

(74) Representative: **Whitlock, Holly Elizabeth Ann**
**R G C Jenkins,**
**26 Caxton Street**
**London SW1H 0RJ (GB)**

(54) **IMAGING DEVICE**

(57)    An imaging device which is capable of preparing metadata quickly and readily in imaging moving picture, having a storage unit prestoring keywords and detection methods detecting objects corresponding to respective keywords, an imaging unit repetitively imaging a field generating the moving picture composed of frame images, a detecting unit detecting the objects from the frame images among the moving picture generated by the imaging, concurrently with the imaging by the imaging unit according to the detection methods for respective keywords, an image information preparing unit preparing image information based on results of the detecting unit, the image information containing the keywords corresponding to the detected objects and information indicating time periods when the objects corresponding to keywords existed in the field; and an image recording unit recording the moving picture generated by the imaging unit and the image information prepared by the image information preparing unit associating with each other.

FIG.1

EP 1 784 006 A1

# Description

Technical Field

The present invention relates to an imaging device which has the function of imaging a moving picture composed of a plurality of images.

Background Art

In recent years, the recording capacities of recording media have enlarged, and an environment where a digitized moving picture is handled has been arranged even at general homes. There has been known technology in which, in order to search for desired scenes from within the moving picture, respective images constituting the moving picture are endowed with keywords, and the desired scenes are retrieved and displayed on the basis of the keywords (refer to, for example, Patent Document 1 and Patent Document 2).
In the invention stated in Patent Document 1, there is disclosed a moving picture processor wherein at least one keyword is generated for and bestowed on each scene of the moving picture on the basis of a user operation, so as to be stored in a storage device together with the moving picture.

Besides, in the invention stated in Patent Document 2, there is disclosed a technique wherein, when the single image in which a certain object exists is designated on the basis of a user operation, those partial sections of the moving picture in which the identical object appears are searched out, and common keywords and relevant information are automatically bestowed on the partial sections.

>   Patent Document 1: Japanese Unexamined Patent
>   Application Publication No. 6-309381
>   Patent Document 2: Japanese Unexamined Patent
>   Application Publication No. 5-204990

Disclosure of the Invention

Problems that the Invention is to Solve

In the moving picture processor disclosed in Patent Document 1, however, a user must reproduce the moving picture and then input the keywords one by one for the individual images. Accordingly, there has been the problem that, especially in case of the moving picture which extends over a long time, a very long time is required for inputting the keywords.
Besides, in the technique disclosed in Patent Document 2, a user may designate the single image in which the object exists, but this single image is one of the series of moving picture images. Accordingly, there has been the problem that, in order to designate the single image, the user must reproduce the moving picture and then wait until the desired part is reproduced. Moreover, even though the single image is designated, a single image in which the object exists must be designated every keyword in order to bestow a plurality of sorts of keywords, and hence, a much longer time is required in proportion to the number of the sorts of the keywords which are bestowed.

Further, in a case where any of these moving picture processors is applied to an imaging device, the moving picture generated by imaging is reproduced, and the designation of the keyword, etc. as stated above are performed. Accordingly, while such operations are being performed, another moving picture cannot be imaged. Still further, a display device (such as liquid-crystal monitor) which the imaging device includes is small in size and is sometimes difficult to confirm the image in detail therewith.

The present invention has for its object to provide an imaging device which is capable of preparing metadata quickly and readily in imaging a moving picture.

Means for Solving the Problems

The imaging device of the present invention comprises a storage unit prestoring therein a plurality of keywords, and detection methods for detecting objects corresponding to the keywords, for the respective keywords; an imaging unit repetitively imaging a field, thereby to generate a moving picture composed of images of a plurality of frames; a detecting unit detecting the objects on the basis of the detection methods of the respective keywords, for the images of the plurality of frames in the moving picture generated by the imaging and concurrently with the imaging based on the imaging unit; an image information preparing unit preparing image information items in accordance with detection results based on the detecting unit, the image information items containing the keywords that correspond to the detected objects, and information items that indicate time periods for which the objects corresponding to the keywords existed in the field; and an image recording unit recording the moving picture generated by the imaging unit and the image information items prepared by the image information preparing unit, in association with each other.

Incidentally, preferably the image information preparing unit may well prepare information items containing start times and end times of the time periods for which the objects existed in the field, for the respective objects detected by the detecting unit, as the information items that indicate the time periods.
Besides, preferably the image information preparing unit may well prepare information items containing the keywords which correspond to the objects detected by said detecting unit in the images of the plurality of frames, for the respective images of the frames in which the detections of the objects were performed by said detecting unit, as the image information items.

Besides, preferably the imaging unit may well include a temporary recording unit temporarily recording the image obtained by the imaging, so that the detecting unit may perform the detection of the object and the generation of the image information item, concurrently with writing the image into the temporary recording unit.

Besides, preferably a keyword designating unit designating the keyword which is a subject for the detection based on the detecting unit, among the plurality of keywords prestored in the storage unit may well be comprised; the detecting unit performing the detection of the object on the basis of the detection method of each of the keywords, only for the keyword designated by the keyword designating unit.

Besides, preferably an imaging scene recording unit recording a plurality of predetermined sorts of imaging scenes with imaging conditions held in correspondence with the respective imaging scenes, and a selection unit selecting a single imaging scene among the plurality of sorts of imaging scenes may well be further comprised; the imaging unit generating the moving picture in accordance with the imaging condition held in correspondence with the single imaging scene selected by the selection unit; the keyword designating unit designating the keyword which is the subject for the detection based on the detecting unit, on the basis of the single imaging scene selected by the selection unit.

Besides, preferably an individual-keyword moving picture generating unit generating a moving picture of each of the keywords designated by the keyword designating unit, on the basis of the image information item prepared by the image information preparing unit may well be comprised; the image recording unit recording the moving picture of each of the keywords as has been generated by the individual-keyword moving picture generating unit, in addition to the moving picture generated by the imaging unit.

Besides, preferably the recording unit may well record the moving picture in which the image of the frame where the object corresponding to the keyword designated by the keyword designating unit was detected by the detecting unit is excluded among the images of the plurality of frames generated by the imaging unit, and the image information item in association with each other.

Besides, preferably the storage unit may well have a registration mode in which the keyword, and the detection method for detecting the object corresponding to the keyword are registered anew; and there may well be comprised a keyword inputting unit inputting the keyword which is to be registered anew, in the registration mode; a designation unit designating the object corresponding to the keyword inputted by the keyword inputting unit, on the basis of the image obtained by the imaging unit; a setting unit extracting feature quantities of the object designated by the designation unit, and setting the detection method for detecting the object, on the basis of the feature quantities; and a control unit storing the keyword inputted by the keyword input unit, and the detection method set by the setting unit; into the storage unit.

Advantage of the Invention

According to the present invention, it is possible to provide an imaging device which is capable of preparing metadata promptly and readily in imaging a moving picture.

Brief Description of the Drawings

[Fig. 1] It is a functional block diagram of an electronic camera 1.
[Fig. 2] It is a flow chart concerning image recognition.
[Fig. 3] It is a flow chart concerning the preparation of metadata.
[Fig. 4] It is a diagram for explaining examples of the metadata.
[Fig. 5] It is a diagram for explaining examples of the metadata.
[Fig. 6] It is a diagram for explaining examples of the metadata.
[Fig. 7] It is a diagram for explaining examples of the metadata.

Best Mode for Carrying Out the Invention

<First Embodiment>

Now, the first embodiment of the present invention will be described in detail with reference to the drawings.

By the way, in the first embodiment, description will be made by mentioning an electronic camera which has a moving-picture imaging function as an example of the imaging device of the invention.

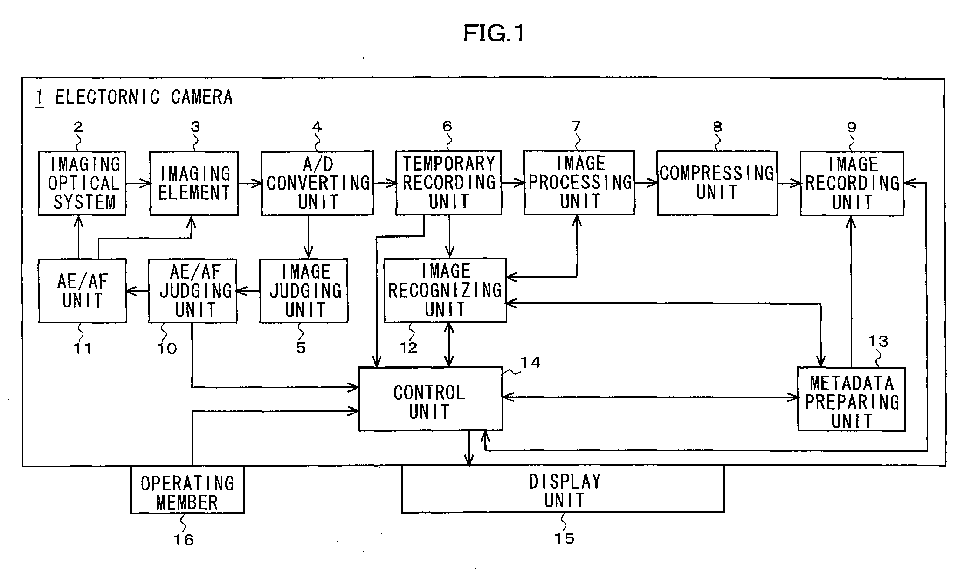

Fig. 1 is the functional block diagram of the electronic camera 1.

As shown in Fig. 1, the electronic camera 1 includes an imaging optical system 2 which is a zoom lens, an imaging element 3 which is a photoelectric conversion element such as CCD (Charge Coupled Device), an A/D converting unit (circuit) 4, an image judging unit (circuit) 5, a temporary recording unit (circuit) 6, an image processing unit (circuit) 7, a compressing unit (circuit) 8, an image recording unit 9, an AE/AF judging unit (circuit) 10, an AE/AF unit 1 1, an image recognizing unit (circuit) 12 and a metadata preparing unit (circuit) 13, and it also includes a control unit 14 which controls the various portions.

When the imaging of a moving picture is instructed by a user, the control unit 14 forms an object image on the imaging element 3 through the imaging optical system 2. The imaging element 3 photoelectrically converts the object image formed on an imaging surface, and outputs analog data. The A/D converting unit 4 converts the analog data outputted from the imaging element 3, into digital data, which are outputted to the image judging unit 5 and which are temporarily recorded into the temporary recording unit 6. The image judging unit 5 judges an exposure state and a focus adjustment state on the basis of the brightness information, the contrast information, etc. of the inputted image data. The temporary recording unit 6 is a buffer memory, and it outputs the data inputted from the A/D converting unit, to the image processing unit 7, image recognizing unit 12 and control unit 14 to be stated later. The image processing unit 7 executes a $\gamma$ process and image processes to be stated later, and outputs image data after the image processing, to the compressing unit 8. The compressing unit 8 subjects the image data after the image processing, to a predetermined compression process, and the image recording unit 9 records image data after the compression. Incidentally, the AE/AF judging unit 10 determines an exposure control value and a focus-adjustment control value on the basis of the exposure state and the focus adjustment state judged in the image judging unit 5, so as to feed the determined values to the AE/AF unit 11, and if necessary, it outputs distance information to an object, luminance information within an imaging screen, etc. to the image recognizing unit 12. The AE/AF unit 11 controls the imaging optical system 2 and the imaging element 3 on the basis of the exposure control value and the focus-adjustment control value.

Besides, the image recognizing unit 12 determines the conditions of the image processes in the image processing unit 7, and it feeds the determined conditions to the image processing unit 7. The image processing unit 7 specifies the region of a specified object (for example, a "blue sky") on the basis of the output of the image recognizing unit 12 (for example, the condition specifying the region of the "blue sky" within the imaging screen (for example, a hue range, a luminance range, and the position of a blue region within the imaging screen as can be regarded as the blue sky)), and it subjects the specified region to the image process (color conversion) so as to become a more appropriate color (for example, a color looking like the blue sky) as may be needed.

Besides, the image recognizing unit 12 stores detection methods in which objects corresponding to a plurality of keywords are detected for the respective keywords, therein beforehand, and it executes image recognitions based on the feature quantities of the image data, by considering the distance information to the object, the luminance information within the imaging screen, etc. acquired from the AE/AF judging unit 10, as may be needed. Besides, the metadata preparing unit 13 stores a plurality of keywords similar to those stored in the image recognizing unit 12, therein beforehand. In addition, the preparation of metadata featuring the invention is made in accordance with a result recognized by the image recognizing unit 12, and the prepared metadata are fed to the image recording unit 9.

Besides, the electronic camera 1 includes the control unit 14 which controls the various portions. The control unit 14 records individual operation programs in an internal memory, not shown, beforehand, and it controls the various portions in accordance with the operation programs. Besides, the control unit 14 outputs the image data to a display unit 15 to be stated below, and it senses the state of an operating member 16 to be stated below. By the way, in Fig. 1, arrows which indicate the connections between the control unit 14 and the respective portions are shown as to only the featuring portions of the invention.

Besides, the electronic camera 1 includes the display unit 15 which presents the display of an image being imaged, a menu display in a user operation to be stated below, etc., and the operating member 16 such as a button which accepts the user operation.
incidentally, the electronic camera 1 is the imaging device having the moving-picture imaging function, and it generates the moving picture composed of a plurality of images, in compliance with the user operation.
In the electronic camera 1 configured as described above, the operation of a moving-picture imaging mode featuring the invention will be described.

When the imaging of the moving picture is instructed through the operating unit 16 by the user, the control unit 14 senses the instruction and controls the imaging optical system 2 and imaging element 3, thereby to start the imaging of the moving picture. The imaging of the moving picture is realized by repetitively performing imagings at predetermined time intervals. In addition, the control unit 14 performs the image recognitions in the image recognizing unit 12 for the images obtained by the imagings, concurrently with the imagings. Concretely, the control unit 14 performs the image recognition for the image preceding one frame (or more), through the image recognizing unit 12 and concurrently with writing the image from the A/D converting unit 4 into the temporary recording unit 6. Further, the control unit 14 prepares the metadata in the metadata preparing unit 13 in accordance with the result of the image recognition.

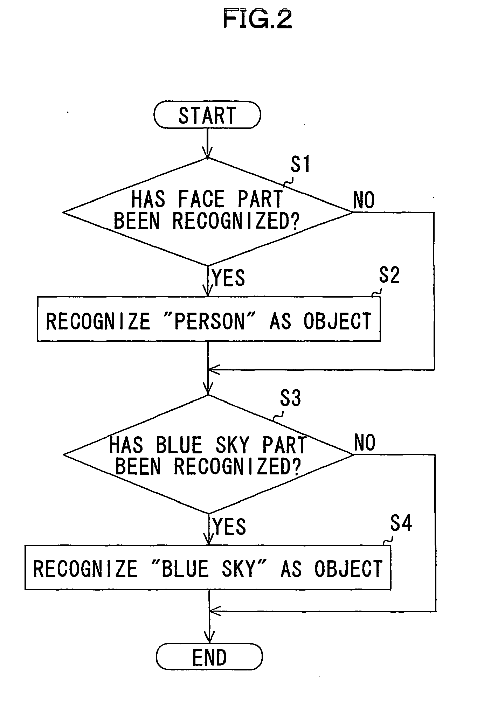

First, the image recognition will be described with reference to the flow chart of Fig. 2. incidentally, here will be described an example in which the image recognizing unit 12 stores therein detection methods wherein a "person" and a "blue sky" are stored as a plurality of keywords and wherein objects corresponding to the keywords are detected (concretely, methods wherein a "face part" and a "blue sky part" are recognized), and in which the metadata preparing unit 13 stores therein a "person" and a "blue sky" as a plurality of keywords.

At a step S1, the control unit 14 judges whether or not the face part has been recognized through the image recognizing unit 12. Incidentally, the image recognizing unit 12 recognizes the face part on the basis of the information obtained in determining the conditions of the image processing in the image processing unit 7.
In order to recognize the face part, the image recognizing unit 12 sets a hue range which can be recognized as a skin color. In this case, even a region which is recognized as the same skin color is considered to correspond to a face, a hand or a foot. In the case of recognizing the face part, accordingly, the skin color regions of the hand and the foot can be excluded by such a technique that a region where the color of hair exists at the contour of or in an adjacent region to the skin color region is judged as the face part. Besides, in this case, the lower-limit value or upper-limit value of the size of the skin color region which can be regarded as the face may well be set on the basis of the imaging distance information which is inputted from the AE/AF judging unit 10.

In a case where the face part has been recognized, the control unit 14 operates at a step S2 to recognize the "person" as an object through the image recognizing unit 12, and to output the keyword ("person") corresponding to the recognized object, to the metadata preparing unit 13.

In a case where the face part has not been recognized at the step S1, or when the keyword ("person") corresponding to the recognized object has been outputted to the metadata preparing unit 13, the control unit 14 judges whether or not the blue sky part has been recognized through the image recognizing unit 12, at a step S3. Incidentally, the image recognizing unit 12 recognizes the blue part on the basis of the information obtained in determining the conditions of the image processing in the image processing unit 7.

Further, the image recognizing unit 12 recognizes a blue part and judges whether or not the blue part exists at the upper part of an image.

The image recognizing unit 12 subjects the blue part recognized on the basis of a predetermined hue range, to a differential process in the vertical direction of the image, and in the existence of an edge in the horizontal direction of the image, the image recognizing unit 12 judges a region above the edge, as the region of the blue sky. Owing to the execution of such processing, a horizontal line can be extracted even in an image whose objects are the blue sky and the sea, with the result that the region of the blue sky can be precisely grasped. In addition, the image recognizing unit 12 outputs information indicating the region of the blue sky, to the image processing unit 7 as an image processing condition.

In a case where the blue sky part has been recognized, the control unit 14 operates at a step S4 to recognize the "blue sky" as an object through the image recognizing unit 12, and to output the keyword ("blue sky") corresponding to the recognized object, to the metadata preparing unit 13. In addition, the control unit 14 ends the image recognition process which is executed through the image recognizing unit 12.

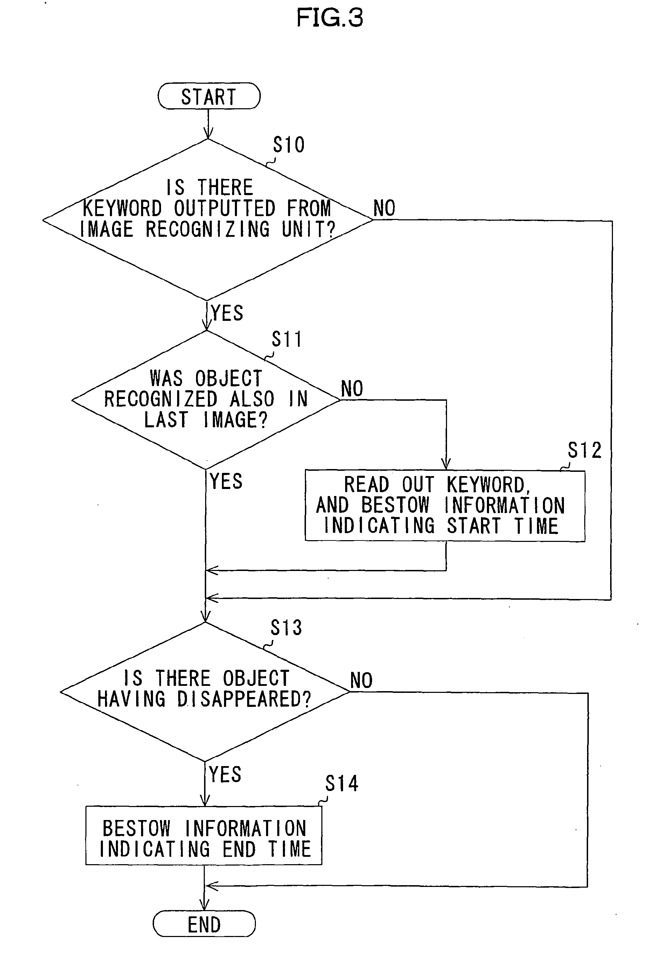

Next, the preparation of the metadata will be described with reference to the flow chart of Fig. 3. Incidentally, the word "metadata" signifies "data on data", and it is image information that contains the keyword corresponding to the object, and information that indicates a time period for which the object corresponding to the keyword has existed in a field.

First, at a step S10, the control unit 14 judges whether or not there is a keyword outputted from the image recognizing unit 12, through the metadata preparing unit 13. In addition, in a case where there is the keyword, the control unit 14 operates at a step S11 to judge whether or not an object corresponding to the keyword is an object recognized also in a temporally last image, through the metadata preparing unit 13. In a case where the object corresponding to the keyword is not the object recognized also in the last image (a case where the object is an object which was not recognized in the last image, and which has been recognized in the current image), the control unit 14 operates at a step S12 to read out the keyword corresponding to the object, through the metadata preparing unit 13, and to endow the data of the keyword with information indicating a start time. Incidentally, the control unit 14 executes the processing of the steps S11 and S12 for all objects recognized in the image processing unit 12.

In addition, at a step S13, the control unit 14 judges whether or not there is an object having disappeared, through the metadata preparing unit 13. More specifically, in the existence of the object which was recognized in the temporally last image and which has not been recognized in the current image, the control unit 14 operates at a step S14 to bestow information indicating an end time, on the data of the keyword which corresponds to the object having disappeared, through the metadata preparing unit 13. Incidentally, the metadata preparing unit 13 renders the decisions on whether or not there is the object having disappeared, for all objects recognized by the image recognizing unit 12 with respect to the last images. In addition, the control unit 14 outputs the prepared metadata from the metadata preparing unit 13 to the image recording unit 9, whereupon the metadata preparation process is ended.

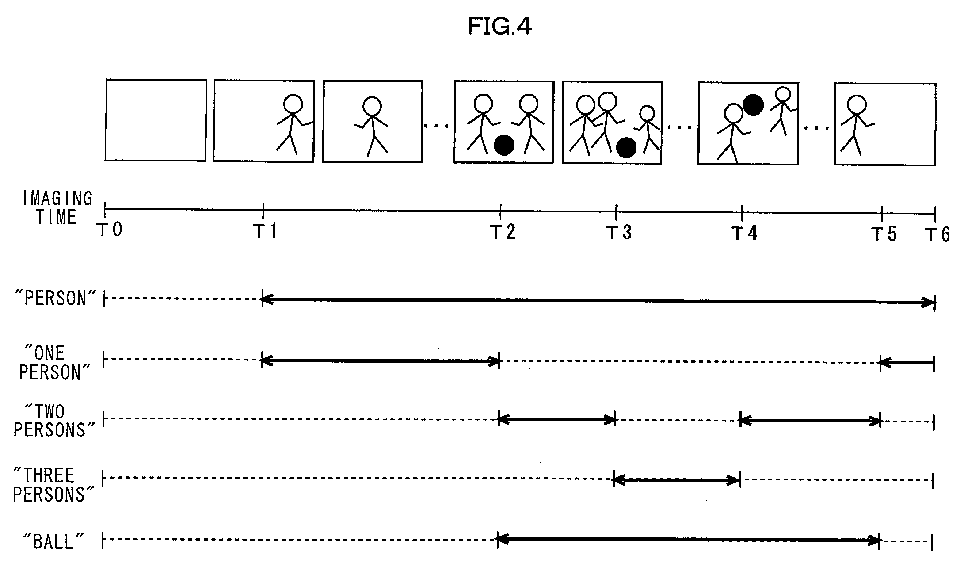

Examples of metadata which are prepared will be described with reference to Fig. 4. Fig. 4 exemplifies a case where the image recognizing unit 12 stores therein detection methods wherein a "person", "X persons (the numbers of persons)" and a "ball" are stored as a plurality of keywords and wherein objects corresponding to the keywords are detected (concretely, methods wherein a "face part", the "number of face parts" and a "circular part" are recognized), and where the metadata preparing unit 13 stores therein a "person", "X persons (the numbers of persons)" and a "ball" as keywords.

The axis of abscissas indicates imaging times, and respective images and keywords corresponding to objects recognized in the images are shown.

It is assumed that imaging is started at a time T0, and that one person appeared within a field at a time T1. Here, the image recognizing unit 12 recognizes "one" "face part", and the metadata preparing unit 13 prepares the keywords "person" and "one person" and sets a start time at T1.

It is assumed that, when a time T2 has been reached, another person appeared within the field, while at the same time, a ball appeared. Here, the image recognizing unit 12 recognizes the "two" "face parts" and the "circular part". The metadata preparing unit 13 prepares the keywords "person", "two persons" and "ball", and it sets a start time at T2 for the "two persons" and "ball" and sets an end time at T2 for the keyword "one person".

It is assumed that, when a time T3 has been reached, still another person appeared within the field. Here, the image recognizing unit 12 recognizes the "three" "face parts" and the "circular part". The metadata preparing unit 13 prepares the keywords "person", "three persons" and "ball", and it sets a start time at T3 for the "three persons" and sets an end time at T3 for the keyword "two persons".

It is assumed that, when a time T4 has been reached, one person disappeared from within the field. Here, the image recognizing unit 12 recognizes the "two" "face parts" and the "circular part". The metadata preparing unit 13 prepares the keywords "person", "two persons" and "ball", and it sets a start time at T4 for the "two persons" and sets an end time at T4 for the keyword "three persons".

It is assumed that, when a time T5 has been reached, the ball and two persons disappeared from within the field. Here, the image recognizing unit 12 recognizes "one" "face part". The metadata preparing unit 13 prepares the keywords "person" and "one person", and it sets a start time at T5 for "one person" and sets an end time at T5 for the keywords "two persons" and "ball". It is assumed that the imaging was thereafter ended at a time T6.

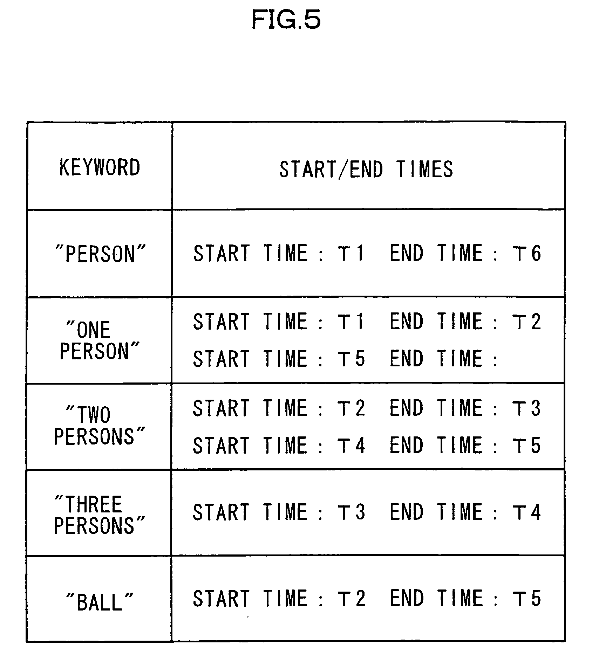

Owing to the process described above, the metadata preparing unit 13 prepares the metadata containing the start times and end times of the time periods for which the objects existed in the field, for the respective detected objects, as shown in Fig. 5.

When the control unit 14 has ended the preparation of the metadata through the metadata preparing unit 13 as stated above, it records the metadata fed from the metadata preparing unit 13, in the image recording unit 9 in association with the images fed from the compressing unit 8.

In this manner, the electronic camera 1 performs the image recognition described with reference to the flow chart of Fig. 2 and the preparation of the metadata as described with reference to the flow chart of Fig. 3, concurrently with the imaging of the moving picture.

As described above, according to the first embodiment, the plurality of keywords and the detection methods in which the objects corresponding to the keywords are detected for the respective keywords are stored beforehand; in generating the moving picture, the objects are detected for the images of a plurality of frames within the moving picture obtained by the imaging, concurrently with the imaging operation and the write operation into the temporary recording unit 6; and the image information items that contain the keywords and the information items indicating the time periods for which the objects corresponding to the keywords existed in the field are prepared in accordance with the results of the detections and are recorded in association with the moving picture. Accordingly, the metadata can be promptly and readily prepared in the case of the moving picture imaging, without requiring any of the reproduction of the moving picture after the imaging, a designation based on a user operation, etc. That is, the preparation of the metadata ends substantially simultaneously with the end of the imaging of the moving picture, so that a labor for the reproduction of the moving picture and labors for the transfers of the images for bestowing keywords, etc. can be dispensed with.

Besides, according to the first embodiment, the information items that contain the start times and end times of the time periods for which the objects existed in the field are prepared for the respective detected objects as the temporal information items. Accordingly, the time period for which the object corresponding to a certain one of the keywords existed in the field can be indicated in a manner easy of understanding.

Besides, according to the first embodiment, the object is detected concurrently with writing the image obtained by the imaging, into the temporary recording unit 6. Accordingly, shortening in a processing time period can be expected.

<Second Embodiment>

Now, the second embodiment of the present invention will be described in detail with reference to the drawings.

By the way, in the second embodiment, description will be made by mentioning an electronic camera which has a moving-picture imaging function as in the first embodiment, as an example of the imaging device of the invention. Only parts different from those of the first embodiment will be described below.

The electronic camera of the second embodiment has a configuration similar to that of the electronic camera 1 of the first embodiment. Hereinbelow, description will be made using the same reference numerals as in the first embodiment.

In the second embodiment, there will be described an example in which an image recognizing unit 12 stores therein a "character A", a "character B", a "character C" and a "ball" as a plurality of keywords and stores therein detection methods that detect objects corresponding to the keywords, and in which a metadata preparing unit 13 stores therein a "character A", a "character B", a "character C" and a "ball" as a plurality of keywords. Incidentally, as the detection method, regarding the "character A", there are stored the feature quantities that his/her facial contour is of round type and has a minor diameter/major diameter = 0.8, that his/her hair color is his/her skin color (skin head), and that he/she has an eye interval/minor diameter = 0.6. Besides, regarding the "character B", there are stored the feature quantities that his/her facial contour is of base type and has a minor diameter/major diameter = 0.5, that his/her hair color is brown, and that he/she has an eye interval/minor diameter = 0.5. Besides, regarding the "character C", there are stored the feature quantities that his/her facial contour is elliptic and has a minor diameter/major diameter = 0.6, that his/her hair color is black, and that he/she has an eye interval/minor diameter = 0.5. Besides, regarding the "ball", there are stored the feature quantities that its contour is circular, and that white and black are simultaneously contained as its colors.

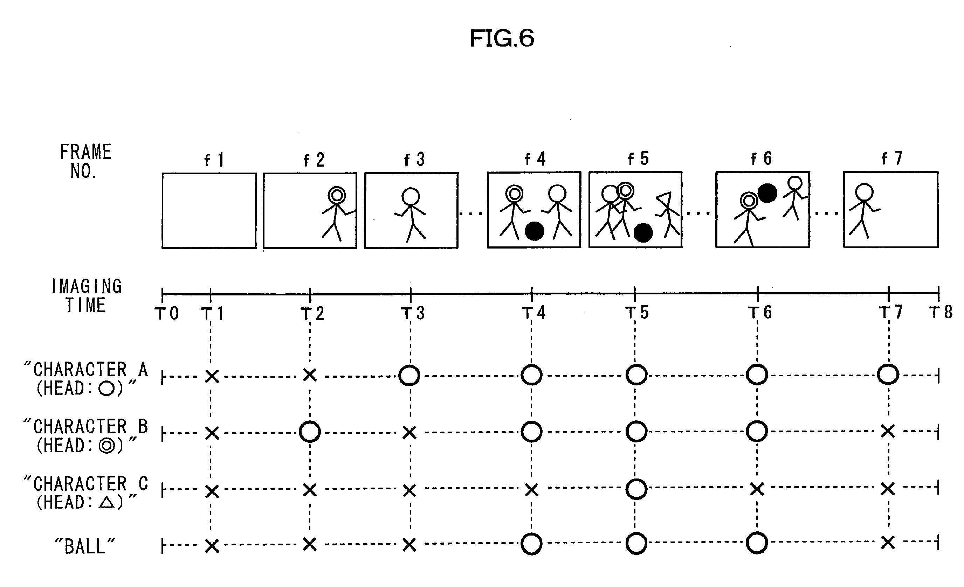

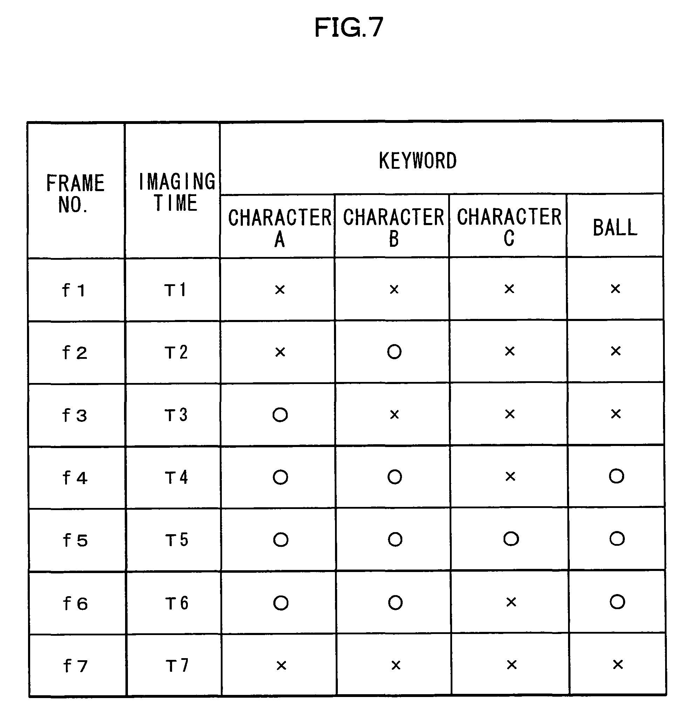

In addition, a control unit 14 executes processing similar to that of the flow chart shown in Fig. 2, so as to recognize the "character A", "character B", "character C" and "ball". Besides, the control unit 14 prepares metadata for the images of respective frames, instead of the processing of the flow chart shown in Fig. 3. In a case, for example, where metadata are prepared for the images of frame Nos. 1 - 7 as shown in Fig. 6, the metadata containing times at which the images of the pertinent frames were imaged, and information items ("o" and "x" in Figs. 6 and 7) which indicate recognition results in the cases where the "character A", "character B", "character C" and "ball" were recognized in the pertinent images, are prepared for the respective frames as shown in Fig. 7.

In addition, the control unit 14 records the metadata from the metadata preparing unit 13 into an image recording unit 9, independently of the recording of the images from a compressing unit 8 into the image recording unit 9. Since a time period is required for image recognition based on the image recognizing unit 12, the preparation of the metadata sometimes requires a time period longer than a time period which is required for image processes based on the image processing unit 7 and a compression process based on the compressing unit 8. Therefore, the control unit 14 starts the recording of the images from the compressing unit 8 into the image recording unit 9 without waiting the end of the preparation of the metadata based on the metadata preparing unit 13, and it records the metadata in association with the images already recorded (or being recorded), when the preparation of the metadata ends. Incidentally, when the preparation and recording of the metadata have ended, the ends of the preparation and recording of the metadata may be notified to a user by employing a display unit 15 or the like.

As described above, according to the second embodiment, the information items which contain the keywords corresponding to the objects detected in the images of the plurality of frames are prepared as the image information items, for those respective images of the frames in which the objects were detected. Accordingly, the time period for which the object corresponding to a certain one of the keywords existed in the field can be indicated in a manner easy of understanding.

By the way, in the first embodiment or the second embodiment, the compression form of the moving picture has not been especially described, but the moving picture may be compressed by any form such as the MPEG, motion JPEG or JPEG 2000. Of course, the moving picture may well be recorded in non-compressed fashion in order to enhance an image quality. Besides, the detection of the objects and the preparation of the image information items as feature the invention need not be performed for all the images constituting the moving picture. In, for example, the MPEG, the detection of the objects and the preparation of the image information items may well be performed for only an I picture being a reference picture, or the detection of the objects and the preparation of the image information items may well be performed by thinning out the images at suitable time intervals.

Besides, in the first embodiment and the second embodiment, it has been described to associate and record the images and the image information items, and insofar as the images and the image information items are associated, they may be recorded either as separate files or as an identical file. That is, they may be recorded in any form of tag information, header information or the like.

Besides, apart from the detection methods for the objects as have been described in the first embodiment and the second embodiment, other elements may well be added or combined. In a case, for example, where the object is a character, the chromaticity value of the color of a skin, the ratio between the interval of eyes and the interval of the eyes and a nose (or mouth), etc. may well be utilized as feature quantities. It is also allowed to employ a configuration in which pattern matching is performed by utilizing contour data or the like as the image data.

Besides, in the first embodiment or the second embodiment, in a case where the electronic camera 1 has a so-called "scene mode" held in correspondence with an imaging condition, a keyword may well be designated in accordance with a selected imaging scene. In this manner, the keyword is designated on the basis of the imaging condition held in correspondence with the imaging scene, and an object is detected only for the keyword. Thus, in case of imaging in, for example, a "portrait" mode, a "person" is designated as the keyword, and a "blue sky" is excluded, whereby the misrecognition of the "blue sky" can be avoided even when the part of a blue wall as might be recognized as the blue sky exits within a field. Besides, even in a case where the blue sky is actually existent, the user intends to image the "person", and hence, an image imaged with the intention of the "person" is not retrieved in the later retrieval of the "blue sky", so that also enhancement in the precision of the retrieval can be expected, and a processing time period for bestowing metadata on respective images is shortened.

Besides, in the first embodiment or the second embodiment, there has been indicated the example in which the image recognitions are performed for all the plurality of predetermined keywords, but the respective processes may well be performed by designating the keywords. By way of example, the keywords may be designated in accordance with the condition of a focus adjustment (by way of example, in a case where the imaging distance between the electronic camera 1 and a focused object is short, a "person" is designated as the keyword, and the keyword of a "blue sky", a "mountain", or the like being the background is excluded, whereas in a case where the imaging distance is long, the "person" is excluded, and the keyword of the "blue sky", the "mountain", or the like is designated), or the keywords may well be directly designated on the display unit 15 in such a way that a user performs operations through the operating member 16. In this manner, the keyword for detection is designated among the plurality of keywords, and the object is detected only for the designated keyword, whereby processes for the unnecessary keywords can be limited beforehand. It is therefore avoidable to prepare the metadata of the erroneous (unnecessary) keywords on account of misrecognitions. Incidentally, it is favorable to adopt a configuration in which, in designating the keywords, not only one keyword, but also a plurality of keywords are designatable. In a case where the plurality of keywords is designated, they may be made designatable by employing a logical formula. By way of example, the designation "that the object of a keyword A does not exist, and that the object of a keyword B exists" is possible by the following logical formula:

## [Formula 1]

$$\bar{A} \ \& \ B$$

Besides, in the first embodiment or the second embodiment, when the imagings of moving pictures have ended or when the moving pictures are recorded into the image recording unit 9, the moving pictures of respective keywords may well be generated and recorded. In this manner, the moving pictures of the respective keywords designated by a keyword designating unit are generated and recorded on the basis of prepared image information items, whereby the user can easily reproduce only the moving pictures of necessary parts in a reproduction mode. Besides, even when images are not separately generated, only the images as to which the user has the designated keywords as metadata may well be successively reproduced in the reproduction mode.

Besides, in the first embodiment or the second embodiment, when the imagings of moving pictures have ended or when the moving pictures are recorded into the image recording unit 9, the moving pictures except certain keywords may well be generated and recorded. In this manner, the moving pictures except the keywords designated by a keyword designating unit are generated and recorded on the basis of prepared image information items, whereby the user can obtain the moving pictures except objects corresponding to the certain keywords.

Besides, whatever keywords may well be included apart from the keywords exemplified in the first embodiment and the second embodiment. Here, information items which are used in image quality adjustments, image processes, etc. are diverted to the detections of objects corresponding to the keywords, whereby the various keywords can be included without exerting a load.

Besides, in the first embodiment or the second embodiment, during the imaging of a moving picture, a through image is displayed on the display unit 15, whereupon among images already imaged, the images of frames which contain objects corresponding to designated keywords may well be scaled down and displayed as a list on the display unit 15, simultaneously with the through image. In a case, for example, where the "character B" was successively detected as shown in the frame 4 - frame 6 in Fig. 6, the representative image of scenes consisting of the frame 4 - frame 6, among the scenes may be determined on the basis of high frequency components, etc., or the image of the first or last frame of the scenes may well be set as the representative image. Besides, instead of the display as the list, the images constituting the scenes may well be displayed in superposition. With such a representative image, the images of all the scenes can be grasped by one image.

Besides, the same display as during the above imaging of the moving picture may well be presented also in the reproduction mode of the moving picture recorded in the image recording unit 9. Besides, the moving picture recorded in the image recording unit 9 may well be subjected to a decoding process so as to detect an object and to prepare image information.

Besides, the first embodiment or the second embodiment may well include a registration mode in which a keyword, and a detection method for detecting an object corresponding to the keyword are registered anew. More specifically, in the registration mode, the keyword to be registered anew is inputted through the operating member 16 or the like, and the object corresponding to the keyword is designated. The designation of the object may be done on the basis of an image already obtained by imaging, or the detection method (feature quantities) may well be concretely designated. By the way, in a case where the object is designated on the basis of the image already obtained by the imaging, the feature quantities of the object may be extracted from the image, so as to determine the detection method on the basis of the feature quantities, or detection may well be done by pattern matching through the utilization of the image itself. In any case, the inputted keyword and the detection method (or the image for the pattern matching) are stored in the image recognizing unit 12, whereby they can be made subjects for the keyword detection in later imaging. Besides, keywords and detection methods for objects may well be inputted through communication/record media from an external database having the keywords and the detection methods.

Besides, in the first embodiment or the second embodiment, the operations performed by the imaging device may well be realized by a computer. More specifically, the moving picture generated by the imaging device is accepted into the computer, whereupon the accepted image may well be subjected to the processes such as the detections of objects and the preparations of image information described in the first embodiment or the second embodiment. Besides, the detection of the object and the preparation of the image information may well be performed while the image is being accepted.

Besides, the inventions described in the first embodiment and the second embodiment may well be carried out by appropriately replacing or combining them.

**Claims**

1. An imaging device comprising:

   a storage unit prestoring therein a plurality of keywords and detection methods for detecting objects corresponding to the respective keywords;

   an imaging unit repetitively imaging a field, thereby to generate a moving picture composed of images of a plurality of frames;

   a detecting unit detecting said objects on the basis of said detection methods of said respective keywords, for the images of the plurality of frames in said moving picture generated by the imaging and concurrently with the imaging based on said imaging unit;

   an image information preparing unit preparing image information items in accordance with detection results based on said detecting unit, the image information items containing said keywords that correspond to said detected objects, and information items that indicate time periods for which said objects corresponding to the keywords existed in said field; and

   an image recording unit recording said moving picture generated by said imaging unit and said image information items prepared by said image information preparing unit, in association with each other.

2. An imaging device as defined in claim 1, wherein:

   said image information preparing unit prepares information items containing start times and end times of the time periods for which the objects existed in said field, for said respective objects detected by said detecting unit, as the information items that indicate the time periods.

3. An imaging device as defined in claim 1, wherein:

   said image information preparing unit prepares information items containing said keywords which correspond to said objects detected by said detecting unit in the images of the plurality of frames, for the respective images of said frames in which the detections of said objects were performed by said detecting unit, as said image information items.

4. An imaging device as defined in claim 1, wherein:

   said imaging unit includes a temporary recording unit temporarily recording the image obtained by the imaging; and

   said detecting unit performs the detection of said object and the generation of said image information item, concurrently with writing the image into said temporary recording unit.

5. An imaging device as defined in claim 1, comprising:

   a keyword designating unit designating said keyword which is a subject for the detection based on said detecting unit, among said plurality of keywords prestored in said storage unit, wherein

   said detecting unit performing the detection of said object on the basis of said detection method of each of said keywords, only for said keyword designated by said keyword designating unit.

6. An imaging device as defined in claim 5, further comprising:

   an imaging scene recording unit recording a plurality of predetermined sorts of imaging scenes with imaging conditions held in correspondence with the respective imaging scenes; and

   a selection unit selecting a single imaging scene among said plurality of sorts of imaging scenes, wherein

   said imaging unit generating said moving picture in accordance with said imaging condition held in correspondence with said single imaging scene selected by said selection unit, and

   said keyword designating unit designating said keyword which is the subject for the detection based on said detecting unit, on the basis of said single imaging scene selected by said selection unit.

7. An imaging device as defined in claim 5 or claim 6, comprising:

   an individual-keyword moving picture generating unit generating a moving picture of each of said keywords designated by said keyword designating unit, on the basis of said image information item prepared by said image information preparing unit, wherein

said image recording unit recording the moving picture of each of said keywords as has been generated by said individual-keyword moving picture generating unit, in addition to said moving picture generated by said imaging unit.

8. An imaging device as defined in claim 5 or claim 6, wherein:

said recording unit records the moving picture in which the image of the frame where said object corresponding to said keyword designated by said keyword designating unit was detected by said detecting unit is excluded among the images of said plurality of frames generated by said imaging unit, and said image information item in association with each other.

9. An imaging device as defined in claim 1, comprising:

a registration mode in said storage unit in which said keyword, and the detection method for detecting said object corresponding to the keyword are registered anew;
a keyword inputting unit inputting the keyword which is to be registered anew, in said registration mode;
a designation unit designating the object corresponding to said keyword inputted by said keyword inputting unit, on the basis of the image obtained by said imaging unit;
a setting unit extracting feature quantities of said object designated by said designation unit, and setting the detection method for detecting said object, on the basis of the feature quantities; and
a control unit storing said keyword inputted by said keyword input unit, and said detection method set by said setting unit, into said storage unit.

# FIG.1

1 ELECTORNIC CAMERA
2 IMAGING OPTICAL SYSTEM
3 IMAGING ELEMENT
4 A/D CONVERTING UNIT
5 IMAGE JUDGING UNIT
6 TEMPORARY RECORDING UNIT
7 IMAGE PROCESSING UNIT
8 COMPRESSING UNIT
9 IMAGE RECORDING UNIT
10 AE/AF JUDGING UNIT
11 AE/AF UNIT
12 IMAGE RECOGNIZING UNIT
13 METADATA PREPARING UNIT
14 CONTROL UNIT
15 DISPLAY UNIT
16 OPERATING MEMBER

# FIG.2

```
            ┌──────────┐
            (  START   )
            └────┬─────┘
                 │
                 ▼          S1
            ◇─────────────◇
           ╱ HAS FACE PART ╲      NO
          ◇ BEEN RECOGNIZED? ◇─────────┐
           ╲                ╱          │
            ◇─────────────◇           │
                 │YES        S2       │
                 ▼                     │
      ┌─────────────────────────────┐ │
      │ RECOGNIZE "PERSON" AS OBJECT │ │
      └──────────────┬──────────────┘ │
                     │◄───────────────┘
                     │
                     ▼          S3
                ◇──────────────◇
              ╱ HAS BLUE SKY PART ╲    NO
             ◇ BEEN RECOGNIZED?    ◇───────┐
              ╲                   ╱        │
                ◇──────────────◇          │
                     │YES          S4     │
                     ▼                     │
      ┌──────────────────────────────┐    │
      │ RECOGNIZE "BLUE SKY" AS OBJECT│    │
      └───────────────┬──────────────┘    │
                      │◄──────────────────┘
                      ▼
                 ┌─────────┐
                 (   END    )
                 └─────────┘
```

EP 1 784 006 A1

# FIG.3

START

S10
IS THERE KEYWORD OUTPUTTED FROM IMAGE RECOGNIZING UNIT? — NO

YES

S11
WAS OBJECT RECOGNIZED ALSO IN LAST IMAGE? — NO

YES

S12
READ OUT KEYWORD, AND BESTOW INFORMATION INDICATING START TIME

S13
IS THERE OBJECT HAVING DISAPPEARED? — NO

YES

S14
BESTOW INFORMATION INDICATING END TIME

END

# FIG.4

# FIG.5

| KEYWORD | START/END TIMES |
|---------|-----------------|
| "PERSON" | START TIME : T1   END TIME : T6 |
| "ONE PERSON" | START TIME : T1   END TIME : T2<br>START TIME : T5   END TIME : |
| "TWO PERSONS" | START TIME : T2   END TIME : T3<br>START TIME : T4   END TIME : T5 |
| "THREE PERSONS" | START TIME : T3   END TIME : T4 |
| "BALL" | START TIME : T2   END TIME : T5 |

# FIG.6

EP 1 784 006 A1

# FIG.7

| FRAME NO. | IMAGING TIME | KEYWORD | | | |
|:---:|:---:|:---:|:---:|:---:|:---:|
| | | CHARACTER A | CHARACTER B | CHARACTER C | BALL |
| f 1 | T1 | × | × | × | × |
| f 2 | T2 | × | ○ | × | × |
| f 3 | T3 | ○ | × | × | × |
| f 4 | T4 | ○ | ○ | × | ○ |
| f 5 | T5 | ○ | ○ | ○ | ○ |
| f 6 | T6 | ○ | ○ | × | ○ |
| f 7 | T7 | × | × | × | × |

## INTERNATIONAL SEARCH REPORT

| | International application No. |
|---|---|
| | PCT/JP2005/012801 |

A. CLASSIFICATION OF SUBJECT MATTER
*H04N5/225* (2006.01), *H04N5/76* (2006.01), *H04N5/91* (2006.01),
*G06F17/30* (2006.01)

According to International Patent Classification (IPC) or to both national classification and IPC

B. FIELDS SEARCHED

Minimum documentation searched (classification system followed by classification symbols)
*H04N5/225* (2006.01), *H04N5/76* (2006.01), *H04N5/91* (2006.01),
*G06F17/30* (2006.01)

Documentation searched other than minimum documentation to the extent that such documents are included in the fields searched
Jitsuyo Shinan Koho          1922-1996    Jitsuyo Shinan Toroku Koho    1996-2005
Kokai Jitsuyo Shinan Koho    1971-2005    Toroku Jitsuyo Shinan Koho    1994-2005

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2004-23656 A  (Canon Inc.),<br>22 January, 2004 (22.01.04),<br>Par. Nos. [0016] to [0039], [0086] to [0092]<br>(Family: none) | 1-9 |
| Y | JP 10-326278 A  (Minolta Co., Ltd.),<br>08 December, 1998 (08.12.98),<br>Par. Nos. [0031] to [0033]<br>(Family: none) | 1-9 |
| Y | JP 2001-57660 A  (Hitachi Kokusai Denki<br>Kabushiki Kaisha, Nippon Hoso Kyokai),<br>27 February, 2001 (27.02.01),<br>Par. Nos. [0101] to [0103]<br>(Family: none) | 1-9 |

☒  Further documents are listed in the continuation of Box C.        ☐  See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 14 October, 2005 (14.10.05) | 25 October, 2005 (25.10.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

**INTERNATIONAL SEARCH REPORT**

International application No.

PCT/JP2005/012801

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 7-322125 A  (Sony Corp.),<br>08 December, 1995 (08.12.95),<br>Par. No. [0014]<br>(Family: none) | 9 |

Form PCT/ISA/210 (continuation of second sheet) (January 2004)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6309381 A

- JP 5204990 A